# EUROPÄISCHE PATENTSCHRIFT

(11) **EP 1 285 933 B1**
(45) Veröffentlichungstag und Bekanntmachung des Hinweises auf die Patenterteilung: **26.03.2008**
(21) Anmeldenummer: 02017717.6
(22) Anmeldetag: 08.08.2002
(51) Int. Cl.: C08F 210/12, C08F 4/16, C08F 4/00

(54) **Verfahren zur Herstellung von Isoolefincopolymeren**
Process for the preparation of isoolefin copolymers
Procédé pour la préparation d'isooléfines

(30) Priorität: 21.08.2001 DE 10140859
(43) Veröffentlichungstag der Anmeldung: 26.02.2003
(73) Patentinhaber: LANXESS Deutschland GmbH, 51369 Leverkusen (DE)
(72) Erfinder: Langstein, Gerhard, Dr., 51515 Kürten (DE); Ismeier, Jürgen, Dr., 85661 Forstinning (DE); Bohnenpoll, Martin, Dr., 51375 Leverkusen (DE); Krauss, Hans Ludwig, Dr., 96049 Bamberg (DE); Resendes, Rui, Dr., Sarnia, Ontario, N7S 7M2 (CA)

(56) Entgegenhaltungen:
- EP-A- 0 295 960
- EP-A- 0 818 476
- WO-A-01/36498
- WO-A-02/18460
- WO-A-92/16477
- US-A- 2 682 531
- US-A- 4 719 271
- PATENT ABSTRACTS OF JAPAN Bd. 0060, Nr. 68 (C-100), 30. April 1982 (1982-04-30) & JP 57 007438 A (JAPAN TOBACCO INC), 14. Januar 1982 (1982-01-14)

## Beschreibung

Gegenstand der vorliegenden Erfindung ist ein neues Verfahren zur Herstellung von Isoolefincopolymeren in Gegenwart von Zirkonhalogeniden und/oder Hafniumhalogeniden und organischen Säurehalogeniden, insbesondere zur Herstellung von höherisoprenhaltigen Butylkautschuken, sowie Isoolefincopolymere aufgebaut aus Isobuten, Isopren und gegebenenfalls weiteren Monomeren.

Das derzeit praktizierte Herstellverfahren für Butylkautschuk ist z.B. aus Ullmanns Encyclopedia of Industrial Chemistry, Vol. A 23, 1993, Seiten 288 bis 295 bekannt. Die Durchführung der kationischen Copolymerisation von Isobuten mit Isopren im Slurryverfahren und mit Methylchlorid als Prozesslösungsmittel erfolgt mit Aluminiumtrichlorid als Initiator unter Zusatz geringer Mengen von Wasser oder Chlorwasserstoff bei -90°C. Die tiefen Polymerisationstemperaturen sind zur Erzielung ausreichend hoher Molekulargewichte für Kautschukanwendungen notwendig.

Der molekulargewichtserniedrigende (= regelnde) Effekt der dienischen Comonomeren kann prinzipiell durch noch tiefere Reaktionstemperaturen kompensiert werden. Dabei treten jedoch die zur Gelbildung führenden Nebenreaktionen verstärkt auf. Die Gelbildung bei Reaktionstemperaturen um -120°C und Möglichkeiten zu deren Reduktion sind beschrieben (siehe: W.A. Thaler, D.J. Buckley, Sr., Meeting of the Rubber Division, ACS, Cleveland, Ohio, May 6 bis 9, 1975, veröffentlicht in Rubber Chemistry & Technology 49, 960 bis 966 (1976)). Die dabei notwendigen Hilfslösungsmittel wie CS₂ sind zum einen schwer zu handhaben und müssen außerdem in relativ hohen Konzentrationen eingesetzt werden.

Bekannt ist weiterhin die gelfreie Copolymerisation von Isobuten mit verschiedenen Comonomeren zu für Kautschukanwendungen ausreichend hochmolekularen Produkten bei Temperaturen um -40°C unter Verwendung von präformiertem Vanadiumtetrachlorid (EP-A1-0 818 476).

US-A-2,682,531 beschreibt Zirkontetrachlorid-Etherkomplexe und deren Verwendung als Katalysatoren zur Polymerisation von unter anderem Isoolefinen. In Spalte 2, Z. 20 ff. wird betont, dass die Verwendung von Zirkontetrachlorid alleine zu ungenügenden Resultaten führt. Der vorzugsweise genutzte Ether ist der krebserregende β,β'-Dichlorethyl-Ether. Der ebenfalls als Beispiel aufgeführte Diphenylether führt nur zu schlecht löslichen Komplexen, die nur in extrem hoher Dosierung eine ausreichende Aktivität zeigen. Diethylether (im Patent namentlich als möglicher Ether genannt) führt zu völlig wirkungslosen Komplexen.

Die ältere Anmeldung DE-A-100 42 118 beschreibt ein Verfahren zur Herstellung von Isoolefincopolymeren unter Verwendung von Initiatorsystemen aus Zirkon- bzw. Hafniumhalogeniden in Gegenwart von organischen Nitroverbindungen. Diese Initiatorsysteme erlauben z. B. die Herstellung hoch ungesättigter Butylkautschuke, haben jedoch den Nachteil, dass die Verwendung organischer Nitroverbindungen im großtechnischen Maßstab wegen der damit verbundenen Explosionsgefahr nur schwer zu realisieren ist.

Aufgabe der vorliegenden Erfindung war die Bereitstellung eines Verfahrens zur Herstellung von hochmolekularen gelarmen Isoolefincopolymeren, insbesondere zur Herstellung von Butylkautschuken mit mehr als 2 % Isopren im Polymer ohne die Verwendung von Nitroverbindungen.

Gegenstand der vorliegenden Erfindung ist ein Verfahren zur Herstellung von hochmolekularen Isoolefincopolymeren in Gegenwart von Zirkonhalogeniden und/oder Hafniumhalogeniden, dadurch gekennzeichnet, dass man in Gegenwart von organischen Säurehalogeniden polymerisiert.

Das Verfahren wird bei Isoolefinen mit 4 bis 16 Kohlenstoffatomen und mit den Isoolefinen copolymerisierbaren Dienen gegebenenfalls in Gegenwart von weiteren mit den Monomeren copolymerisierbaren Monomeren eingesetzt. Besonders bevorzugt werden Isobuten und Isopren gegebenenfalls in Gegenwart von weiteren mit diesen copolymerisierbaren Monomeren eingesetzt.

Das Verfahren wird bevorzugt in einem für die kationische Polymerisation geeigneten Lösungsmittel, wie halogenierte und nicht-halogenierte Kohlenwasserstoffen oder deren Gemische, insbesondere Chloralkanen und Chloralkan/Alkan-Gemischen, ganz besonders Methylchlorid und Methylenchlorid oder deren Mischungen mit Alkanen, durchgeführt.

Bevorzugt wird das Zirkonhalogenid und/oder Hafniumhalogenid in Abwesenheit des Monomeren mit dem organischen Säurehalogenid gemischt.

Die zum Einsatz kommenden organischen Säurehalogenide sind generell bekannt und allgemein verfügbar. Die erfindungsgemäß bevorzugt verwendeten Säurehalogenide sind durch die allgemeine Formel (I)

R-COX (I)

definiert, wobei R ausgewählt wird aus der Gruppe C₁-C₁₈-Alkyl, C₃-C₁₈-Cycloalkyl oder C₆-C₂₄-Cycloaryl.

Unter C₁-C₁₈-Alkyl werden sämtliche dem Fachmann bekannte lineare oder verzweigte Alkylreste mit 1 bis 18 C-Atomen verstanden, wie Methyl, Ethyl, n-Propyl, i-Propyl, n-Butyl, i-Butyl, t-Butyl, n-Pentyl, i-Pentyl, neo-Pentyl, Hexyl und die weiteren Homologen, die ihrerseits wiederum substituiert sein können. Als Substituenten kommen hierbei insbesondere Alkyl, sowie Cycloalkyl oder Aryl in Frage, wie Benzyl, Trimethylphenyl, Ethylphenyl. Bevorzugt werden lineare Alkylreste mit 1 bis 18 C-Atomen, besonders bevorzugt Methyl, Ethyl und Benzyl.

Unter C₆-C₂₄-Aryl werden sämtliche dem Fachmann bekannte ein- oder mehrkernige Arylreste mit 6 bis 24 C-Atomen verstanden, wie Phenyl, Naphthyl, Anthracenyl, Phenanthracenyl, und Fluorenyl, die ihrerseits wiederum substituiert sein können verstanden. Als Substituenten kommen hierbei insbesondere Alkyl, sowie Cycloalkyl oder Aryl in Frage, wie Toloyl und Methylfluorenyl. Bevorzugt wird Phenyl.

Unter C₃-C₁₈-Cycloalkyl werden sämtliche dem Fachmann bekannte ein- oder mehrkernige Cycloalkylreste mit 3 bis 18 C-Atomen verstanden, wie Cyclopropyl, Cyclobutyl, Cyclopentyl, Cyclohexyl, Cycloheptyl, Cyclooctyl und die weiteren Homologen, die ihrerseits wiederum substituiert sein können. Als Substituenten kommen hierbei insbesondere Alkyl, sowie Cycloalkyl oder Aryl in Frage, wie Benzyl, Trimethylphenyl, Ethylphenyl. Bevorzugt werden Cyclohexyl und Cyclopentyl.

Der Rest X steht für die Halogene Fluor, Chlor, Brom und Jod. Bevorzugt steht X für Chlor.

Die Konzentration des organischen Säurehalogenids im Reaktionsmedium beträgt dabei bevorzugt im Bereich von 1 bis 500 ppm, besonders bevorzugt im Bereich von 10 bis 100 ppm. Das molare Verhältnis Säurehalogenid zu Zirkon und/oder Hafnium ist dabei bevorzugt im Bereich von 0,5 bis 50 besonders bevorzugt im Bereich von 1 bis 30 und ganz besonders bevorzugt im Bereich von 2 bis 10.

Die Polymerisation der Monomeren erfolgt in der Regel kationisch bei Temperaturen im Bereich von -120°C bis +20°C, bevorzugt im Bereich von -95°C bis -20°C und Drücken im Bereich von 0,1 bis 4 bar.

Geeignete Zirkonhalogenide und/oder Hafniumhalogenide sind beispielsweise Zirkondichlorid, Zirkontrichlorid, Zirkontetrachlorid, Zirkonoxidichlorid, Zirkontetrafluorid, Zirkontetrabromid und Zirkontetrajodid, Hafniumdichlorid, Hafniumtrichlorid, Hafniumoxidichlorid, Hafniumtetrafluorid, Hafniumtetrabromid und Hafniumtetrajodid und Hafniumtetrachlorid. Ungeeignet sind in der Regel Zirkon- und/oder Hafniumhalogenide mit sterisch anspruchsvollen Substituenten wie z.B. Zirkonocendichlorid oder Bis(methylcyclopentadienyl)zirkonium-dichlorid. Bevorzugt wird Zirkontetrachlorid eingesetzt. Dieses kann vorteilhaft in Form einer Lösung in einem wasser- und sauerstofffreien Alkan oder Chloralkan oder einem Gemisch der beiden mit einer Zirkonkonzentration unterhalb von 4 Gew.% eingesetzt werden. Es kann vorteilhaft sein, die Zr-Lösung bei Raumtemperatur oder darunter für wenige Minuten bis zu 1000 Stunden zu lagern (altern), bevor sie eingesetzt wird. Es kann vorteilhaft sein, diese Alterung unter Lichteinwirkung durchzuführen.

Weiterhin kann es vorteilhaft sein, Mischungen des erfindungsgemäßen Katalysatorsystems mit herkömmlichen Katalysatoren, wie AlCl₃ und aus AlCl₃ herstellbaren Katalysatorsysteme, Diethylaluminiumchlorid, Ethylaluminiumchlorid, Titantetrachlorid, Zinntetrachlorid, Bortrifluorid, Bortrichlorid, Vanadiumtetrachlorid oder Methylalumoxan, insbesondere AlCl₃ und aus AlCl₃ herstellbaren Katalysatorsystemen, einzusetzen. Diese Kombination stellt einen weiteren Gegenstand der Erfindung dar.

Bei der Herstellung derartiger Mischungen kann das molare Verhältnis Lewis-Säure : Zirkon und/oder Hafnium im Bereich von 99:1 bis 1:99 liegen, bevorzugt im Bereich von 99:1 bis 1:1, besonders bevorzugt im Bereich von 20:1 bis 5:1.

Das molare Verhältnis Säurehalogenid zu Zirkon und/oder Hafnium ist bei derartigen Mischungen bevorzugt im Bereich von 0,5 bis 50, besonders bevorzugt im Bereich von 1 bis 30 und ganz besonders bevorzugt im Bereich von 2 bis 10.

Es kann vorteilhaft sein, dem Katalysatorsystem geringe Mengen von Wasser, Alkoholen, eines Alkylhalogenids oder Halogenwasserstoff zuzusetzen.

Die Polymerisation kann sowohl in kontinuierlicher als auch in diskontinuierlicher Fahrweise durchgeführt werden. In kontinuierlicher Fahrweise wird das Verfahren bevorzugt mit folgenden drei Einfahrströmen durchgeführt:
1. Lösungsmittel/Verdünnungsmittel + Isoolefin (bevorzugt Isobuten)
2. Dien (bevorzugt Isopren)
3. Zirkonhalogenid und/oder Hafniumhalogenid (bevorzugt ZrCl₄ in Lösungsmittel) + organisches Säurehalogenid.

In einer diskontinuierlichen Fahrweise kann das Verfahren beispielsweise wie folgt durchgeführt werden:

Der auf Reaktionstemperatur vorgekühlte Reaktor wird mit dem Lösungsmittel oder Diluent und den Monomeren beschickt. Anschließend wird der Initiator zusammen mit dem Säurehalogenid in Form einer verdünnten Lösung so zugepumpt, dass die Polymerisationswärme problemlos abgeführt werden kann. Der Verlauf der Reaktion kann anhand der Wärmeentwicklung verfolgt werden. Die Katalysatorlösung kann auch mit ein Schleuse portionsweise zugegeben werden.

Alle Operationen werden unter Schutzgas durchgeführt. Nach dem Ende der Polymerisation wird mit einem phenolischen Antioxidant, wie z.B. 2,2'-Methylen-bis-(4-methyl-6-tert-butylphenol), gelöst in Ethanol abgestoppt.

Durch das erfindungsgemäße Verfahren lassen sich hochmolekulare Isoolefincopolymere herstellen. Die Doppelbindungen werden durch die Menge an eingebautem Dien bestimmt. Die Molekulargewichte (Mv) reichen (je nach Isoprengehalt und Reaktionstemperatur) üblicherweise von 300 - 1200 kg/mol, die Polymere haben einen sehr geringen Gelgehalt.

Die erhältlichen Polymere eignen sich vorzüglich zur Herstellung von Formkörpern aller Art, insbesondere Reifenbestandteilen, ganz besonders sog. inner linern, sowie sog. Technischen Gummiartikeln, wie Stopfen, Dämpfungselemente, Profile, Folien, Beschichtungen. Die Polymere werden hierzu rein oder im Gemisch mit anderen Kautschuken, wie BR, HNBR, NBR, SBR, EPDM oder Fluorkautschuken eingesetzt. Zur Veranschaulichung der vorliegenden Erfindung sind folgende Beispiele angefiihrt:

### Beispiele

### Experimentelle Einzelheiten

Die **Gelgehalte** wurden in Toluol nach einer Lösezeit von 24 Stunden bei 30°C mit einer Probenkonzentration von 12,5 g/l bestimmt. Die Abtrennung der unlöslichen Anteile erfolgte durch Ultrazentrifugation (1 Stunde bei 20 000 UpM und 25°C). Proben mit hohem Gelgehalt wurden in o-Dichlorbenzol bei 140°C überprüft.

Die **Lösungsviskosität** η der löslichen Anteile wurde in Toluol bei 30°C durch Ubbelohde-Kapillarviskosimetrie bestimmt.

Das aus der Grenzviskosität berechnete **Molekulargewicht Mᵥ** wurde nach der folgenden Formel bestimmt: In (Mᵥ) = 12,48 + 1,565 * In η.

Der Mooney-Wert wurde bei 125°C nach einer Messdauer von 8 Minuten bestimmt.

Als **Schutzgas** wurde Argon der Qualität 4,8 (Linde) verwendet.

Der **Monomereneinbau** und der "**branching point**"¹ wurden mittels Hochfeldprotonenresonanz bestimmt.

¹ J. L. White, T. D. Shaffer, C. J. Ruff, J. P. Cross: Macromolecules (1995) 28, 3290

Das bei den Polymerisationen eingesetzte **Isobuten** (Fa. Gerling+Holz, Deutschland, Qualität 2.8) wurde zur Trocknung durch eine mit Natrium auf Aluminiumoxid (Gehalt 10 %) gefüllte Säule geleitet.

Das verwendete **Isopren** (Fa. Acros, 99%) wurde zur Entfernung des Stabilisators unter Argon durch eine Säule mit getrocknetem Aluminiumoxid filtriert, unter einer Argonatmosphäre über Calciumhydrid destilliert, und in dieser Form für die Polymerisation eingesetzt. Der Wassergehalt betrug 25 ppm.

Das verwendete **Methylchlorid** (Fa. Linde, Qualität 2.8) wurde zur Reinigung durch eine Säule mit Aktivkohle und eine weitere Säule mit Sicapent geleitet und in dieser Form eingesetzt.

Das **Methylenchlorid** (Fa. Merck, Qualität: Zur Analyse ACS, ISO) wurde zur Trocknung unter einer Argonatmosphäre über Phosphorpentoxid destilliert.

Das **Acetylchlorid** (Fa. Aldrich, 99+ %) wurde unter Argon destilliert.

Das verwendete **Zirkontetrachlorid** (>= 98 %) wurde von der Fa. Fluka bezogen.

Das verwendete **Aluminiumtrichlorid** (98,5 %) wurde von der Fa. Janssen Chimica bezogen.

Zum **Abstoppen der Polymerisationen** wurde eine gekühlte Lösung von 2 g Irganox 1010 (Ciba) in 250 ml Ethanol verwendet.

### Beispiel 1 (Bereitung des Initiators)

In ein Schlenkgefäß werden unter Ar-Schutzgas 0,233 g ZrCl₄ eingewogen und mit 60 µl Acetylchlorid versetzt. Anschließend werden bei -40°C 100 g Methylchlorid einkondensiert und 4 Stunden dieser Temperatur gerührt. Die Initiatorlösung ist leicht trüb. Der Initiator kann so oder in einer verdünnen Form eingesetzt werden.

### Beispiel 2 (Polymerisation, Initiatorlösung zudosiert)

### 2a

In einen Schlenk-Vierhalskolben wurden 700 g trockenes Methylchlorid und 300 g Isobuten bei -90°C einkondensiert. 24,5 g Isopren wurden in flüssiger Form zugegeben. Der Monomerfeed wurde anschließend auf -80°C temperiert. Der in Beispiel 1 beschriebene Initiator wurde in einen auf -40°C gekühlten Tropftrichter überführt. Die Polymerisation wurde durch langsames Zutropfen der Initiatorlösung so durchgeführt, dass die Temperatur bei -80°C gehalten werden konnte. In 17 Minuten wurden 22 ml der Initiatorlösung zugetropft. Die zuerst milchige Suspension verklebte nach 16 min so stark, dass die Innentemperatur nicht mehr gehalten werden konnte und auf -75,2°C stieg. Die Reaktion wurde abgestoppt. Es konnten 54,6 g getrocknetes Polymer mit einem Staudingerindex von 1,7 dl/g und einem Gelgehalt von 0,9 % erhalten werden. Der 1,4-eingebaute Isoprenanteil betrug 2,4 mol-%.

### 2b

In einen Schlenk-Vierhalskolben wurden 700 g trockenes Methylchlorid und 300 g Isobuten bei -90°C einkondensiert. 32,7 g Isopren wurden in flüssiger Form zugegeben. Der Monomerfeed wurde anschließend auf -90°C temperiert. Eine analog Beispiel 1 hergestellte Initiatorlösung, die jedoch nur 2 h bei -40°C gerührt wurde, wurde in einen auf -40°C gekühlten Tropftrichter überführt. Die Polymerisation wurde durch langsames Zutropfen der Initiatorlösung so durchgeführt, dass die Temperatur bei -90°C gehalten werden konnte. In 30 Minuten wurden 44 ml der Initiatorlösung zugetropft. Die zuerst milchige Suspension verklebte so stark, dass die Innentemperatur auf -89,4°C stieg. Die Reaktion wurde nach 30 min abgestoppt. Es konnten 25,9 g getrocknetes Polymer mit einem Staudingerindex von 1,71 dl/g und einem Gelgehalt von 0,9 % erhalten werden. Der 1,4-eingebaute Isoprenanteil betrug 3,84 mol-%.

### 2c

In einen Schlenk-Vierhalskolben wurden 700 g trockenes Methylchlorid und 300 g Isobuten bei -90°C einkondensiert. 40,9 g Isopren wurden in flüssiger Form zugegeben. Der Monomerfeed wurde anschließend auf -90°C temperiert. Eine analog Beispiel 1 hergestellte Initiatorlösung, die jedoch nur 2 h bei -40°C gerührt wurde, wurde in einen auf -40°C gekühlten Tropftrichter überführt. Die Polymerisation wurde durch langsames Zutropfen der Initiatorlösung so durchgeführt, dass die Temperatur bei -90°C gehalten werden konnte. In 30 Minuten wurden 56 ml der Initiatorlösung zugetropft. Die zuerst milchige Suspension wurde schnell stark trüb, klumpte nach 42 ml zusammen und die Innentemperatur auf -89,7°C stieg. Die Reaktion wurde nach 27 min abgestoppt. Es konnten 32,6 g getrocknetes Polymer mit einem Staudingerindex von 1,47 dl/g und einem Gelgehalt von 0,8 % erhalten werden. Der 1,4-eingebaute Isoprenanteil betrug 4,77 mol-%.

### 2d

In einen Schlenk-Vierhalskolben wurden 700 g trockenes Methylchlorid und 300 g Isobuten bei -90°C einkondensiert. 8,2 g Isopren wurden in flüssiger Form zugegeben. Der Monomerfeed wurde anschließend auf -90°C temperiert. Eine bei -40°C hergestellte Initiatorlösung aus 268 mg ZrCl₄, 5 ml Benzoylchlorid und 100 g Methylchlorid wurde nach 30minütiger Alterung in einen auf -40°C gekühlten Tropftrichter überführt. Die Polymerisation wurde durch langsames Zutropfen der Initiatorlösung so durchgeführt, dass die Temperatur bei -90°C gehalten werden konnte. In 48 Minuten wurden 82 ml der Initiatorlösung zugetropft. Die zuerst milchige Suspension klumpte nach 20 ml zusammen und die Innentemperatur auf -Die Innentemperatur stieg bis auf -89,6°C an. Es konnten 26,5 g getrocknetes Polymer mit einem Staudingerindex von 2,44 dl/g und einem Gelgehalt von 0,8 % erhalten werden.

### Beispiel 3 (Polymerisation, Initiatorlösung batchweise zugegeben)

### 3a

In einen Schlenk-Vierhalskolben wurden 460 g trockenes Methylchlorid und 36 g Isobuten bei -90°C einkondensiert. 2,55 g Isopren wurden in flüssiger Form zugegeben. Der Monomerfeed wurde anschließend auf -90°C temperiert. Eine analog Beispiel 1 hergestellte Initiatorlösung wurde in einen auf -40°C gekühlten Tropftrichter überführt. Die Polymerisation wurde durch Zugabe der Initiatorlösung durch ein Schenkrohr gestartet. Die Temperatur stieg auf -86,5°C. Die Reaktion wurde nach 5 min abgestoppt. Es konnten 14,1 g getrocknetes Polymer mit einem Staudingerindex von 0,8 dl/g und einem Gelgehalt von 0,4 % erhalten werden. Der 1,4-eingebaute Isoprenanteil betrug 2,12 mol-%.

## Patentansprüche

1. Verfahren zur Herstellung von Isoolefincopolymeren in Gegenwart von Zirkoniumhalogeniden und/oder Hafniumhalogeniden, **dadurch gekennzeichnet, dass** man Isoolefine mit 4 bis 16 Kohlenstoffatomen in Gegenwart von organischen Säurehalogeniden polymerisiert.

2. Verfahren nach Anspruch 1, **dadurch gekennzeichnet, dass** das organische Säurehalogenid der allgemeinen Formel (I)
R-COX (I)
entspricht, wobei R ausgewählt wird aus der Gruppe C₁-C₁₈-Alkyl, C₃-C₁₈-Cycloalkyl oder C₆-C₂₄-Cycloaryl und X gleich Fluor, Chlor, Brom oder Jod sein kann.

3. Verfahren nach Anspruch 1 und/oder 2, **dadurch gekennzeichnet, dass** die Konzentration des organischen Säurehalogenids im Reaktionsmedium im Bereich von 1 bis 500 ppm liegt.

4. Verfahren nach einem oder mehreren der Ansprüche 1 bis 3, **dadurch gekennzeichnet, dass** man als Zirkoniumhalogenid ZrCl₄ und als Hafniumhalogenid HfCl₄ einsetzt.

5. Verfahren nach einem oder mehreren der Ansprüche 1 bis 4, **dadurch gekennzeichnet, dass** man Isobuten mit Isopren und gegebenenfalls weiteren Monomeren copolymerisiert.

6. Verfahren nach einem oder mehreren der Ansprüche 1 bis 5, **dadurch gekennzeichnet, dass** man zusätzlich AlCl₃ oder ein aus AlCl₃ herstellbares Katalysatorsystem einsetzt.

7. Verwendung der gemäß wenigstens einem der vorhergehenden Ansprüche erhaltenen Mischung als Katalysator.

## Claims

1. Process for the preparation of isoolefin copolymers in the presence of zirconium halides and/or hafnium halides, **characterized in that** isoolefins having 4 to 16 carbon atoms are polymerized in the presence of organic acid halides.

2. Process according to Claim 1, **characterized in that** the organic acid halide corresponds to the general formula (I)
R-COX (I)
wherein R is selected from the group C₁-C₁₈-alkyl, C₃-C₁₈-cycloalkyl or C₆-C₂₄-cycloaryl and X can be fluorine, chlorine, bromine or iodine.

3. Process according to Claim 1 and/or 2, **characterized in that** the concentration of the organic acid halide in the reaction medium is in the range from 1 to 500 ppm.

4. Process according to one or more of Claims 1 to 3, **characterized in that** the zirconium halide used is ZrCl₄ and the hafnium halide used is HfCl₄.

5. Process according to one or more of Claims 1 to 4, **characterized in that** isobutene is copolymerized with isoprene and, optionally, with further monomers.

6. Process according to one or more of Claims 1 to 5, **characterized in that** AlCl₃ or a catalyst system that can be prepared from AlCl₃ is additionally used.

7. Use of the mixture obtained in accordance with at least one of the preceding claims as catalyst.

## Revendications

1. Procédé de fabrication de copolymères d'isooléfine en présence d'halogénures de zirconium et/ou d'halogénures d'hafnium, **caractérisé en ce qu'**on polymérise des isooléfines ayant 4 à 16 atomes de carbone en présence d'halogénures d'acide organiques.

2. Procédé selon la revendication 1, **caractérisé en ce que** l'halogénure d'acide organique correspond à la formule générale (I)
R-COX (I)
dans laquelle R est choisi parmi le groupe des alkyle en C₁-C₁₈, cycloalkyle en C₃-C₁₈ ou cycloaryle en C₆-C₂₄ et X peut être égal au fluor, au chlore, au brome ou à l'iode.

3. Procédé selon la revendication 1 et/ou 2, **caractérisé en ce que** la concentration de l'halogénure d'acide organique dans le milieu réactionnel se situe dans l'intervalle entre 1 et 500 ppm.

4. Procédé selon l'une ou plusieurs des revendications 1 à 3, **caractérisé en ce qu'**on utilise comme halogénure de zirconium du ZrCl₄ et comme halogénure d'hafnium du HfCl₄.

5. Procédé selon l'une ou plusieurs des revendications 1 à 4, **caractérisé en ce qu'**on copolymérise l'isobutène avec l'isoprène et le cas échéant d'autres monomères.

6. Procédé selon l'une ou plusieurs des revendications 1 à 5, **caractérisé en ce qu'**on utilise en plus de l'AlCl₃ ou un système de catalyseur fabricable à partir d'AlCl₃.

7. Utilisation du mélange qu'on obtient selon au moins l'une des revendications précédentes, comme catalyseur.
